Europäisches Patentamt

European Patent Office

Office européen des brevets

(19)

(11) EP 0 650 926 B1

(12) EUROPÄISCHE PATENTSCHRIFT

(45) Veröffentlichungstag und Bekanntmachung des
Hinweises auf die Patenterteilung:
14.01.1998 Patentblatt 1998/03

(51) Int. Cl.$^6$: C01B 33/32

(21) Anmeldenummer: 94112490.1

(22) Anmeldetag: 10.08.1994

(54) **Verfahren zur Herstellung körniger Natriumsilikate**

Process for the preparation of granular sodium silicate

Procédé de préparation de silicate de sodium granulaire

(84) Benannte Vertragsstaaten:
AT BE CH DE DK ES FR GB IT LI LU NL PT SE

(30) Priorität: 11.09.1993 DE 4330868

(43) Veröffentlichungstag der Anmeldung:
03.05.1995 Patentblatt 1995/18

(73) Patentinhaber: Clariant GmbH
65929 Frankfurt am Main (DE)

(72) Erfinder:
• Tapper, Alexander, Dr.
D-41239 Mönchengladbach (DE)
• Schimmel, Günther, Dr.
D-50374 Erftstadt (DE)
• Rieck, Hans-Peter, Dr.
D-65719 Hofheim (DE)
• Nöltner, Gerhard
D-65929 Frankfurt am Main (DE)

(56) Entgegenhaltungen:
EP-A- 0 075 250          EP-A- 0 425 427
EP-A- 0 425 428          WO-A-91/13026
DE-A- 2 420 297          DE-B- 2 014 674

**Beschreibung**

Die vorliegende Erfindung betrifft ein Verfahren zur Herstellung eines verdichteten, körnigen Natriumsilikates mit einem Molverhältnis von $SiO_2 : Na_2O$ von 1,7 : 1 bis 4,1 : 1, insbesondere von 2 : 1 bis 3,5 : 1.

Natriumsilikate sind für verschiedene Einsatzzwecke verwendbar. Sie können in Wasch- und Reinigungsmitteln für die notwendige Alkalität sorgen und haben gute Puffereigenschaften. Einige Natriumsilikate zeigen darüber hinaus gute wasserenthärtende Eigenschaften. Hierbei sind in erster Linie die kristallinen schichtförmigen Natriumsilikate mit einem Molverhältnis $SiO_2 : Na_2O$ von etwa 1,7 : 1 bis 4,1 : 1 zu nennen.

In jüngster Zeit sind Wasch- und Reinigungsmittel als sog. Kompakttypen am Markt eingeführt worden, durch welche wegen ihrer geringen Packungsgröße ein Beitrag zur gewünschten Reduzierung von Verpackungsmaterial geleistet werden soll. Die Kompakttypen enthalten in der Regel unter Verzicht auf Stellmittel oder Füllstoffe nur Inhaltsstoffe mit hoher Schüttdichte.

Aus der US-PS 5 236 682 ist ein Verfahren zur Herstellung von kristallinen Natriumsilikaten mit Schichtstruktur bekannt, bei welchem amorphes Natriumsilikat mit einem Wassergehalt von 15 bis 23 Gewichts-% in einem Drehrohrofen bei Temperaturen von 500 bis 850 °C calziniert wird, das Calcinat nach Brechen und Mahlen einem Walzenkompaktierer zugeführt und dann zu Schulpen verpreßt wird und die Schulpen nach Vorzerkleinern und Absieben zu einem Granulat mit einem Schüttgewicht von 700 bis 1000 g/l verarbeitet werden.

Nachteilig ist bei diesem Granulat seine geringe Abriebfestigkeit, welche sich bei seiner pneumatischen Förderung, insbesondere bei einer Schnellflugförderung, durch Auftreten eines unerwünscht hohen Staubanteils negativ bemerkbar macht.

Es ist daher Aufgabe der Erfindung, ein Verfahren zur Herstellung eines verdichteten, körnigen Natriumsilikates anzugeben, welches abrasive Einwirkungen, beispielsweise eine mechanische Förderung, im wesentlichen unbeschadet übersteht. Das wird erfindungsgemäß dadurch erreicht, daß man ein Natriumsilikat mit einem mittleren Korndurchmesser von < 500 μm zunächst mit einem seine Härte erhöhenden Material wobei es sich um mindestens eine Substanz aus der Gruppe Wasser, Kieselsol, Kieselgel, nichtionische, anionische oder kationische Tenside, Wasserglas, flüssige oder getrocknete Wasserglaslösungen, Maleinsäure und/oder Acrylsäure sowie deren Polymere und Copolymere handelt; innig vermischt, bevor man es durch Kompaktieren, Zerkleinern und Absieben in ein Preßgranulat mit Korngrößen von 0,1 bis 5 mm überführt.

Das Verfahren gemäß der Erfindung kann weiterhin wahlweise auch noch dadurch ausgestaltet sein, daß

a) dem Natriumsilikat das seine Härte erhöhende Material in einer Menge von bis zu 5 Gewichts-% zugesetzt wird;

b) das Natriumsilikat nach dem Erzeugen des Preßgranulats zunächst mechanisch gerundet wird;

c) man das Preßgranulat mit dem seine Härte erhöhenden Material in einer Menge bis zu 6 Gewichts-%, bezogen auf das Natriumsilikat, zusätzlich umhüllt;

d) die Überführung in Preßgranulat bei Temperaturen von 15 bis 180 °C erfolgt;

e) man die zusätzliche Umhüllung des Preßgranulates mit dem seine Härte erhöhenden Material bei einer Temperatur zwischen 15 und 130 °C durchführt;

f) man die Körnung des Natriumsilikates auf einem Walzenkompaktierer mit integrierter Zerkleinerung der entstehenden Schulpen durchführt.

Der in den folgenden Beispielen angegebene Abrieb wurde ermittelt, indem man zunächst die Teilchengrößenverteilung an einer 50-g-Probe durch Siebanalyse (verwendeter Apparat: RETSCH VIBRATONIC) ermittelt und daraus den mittleren Teilchendurchmesser bestimmt: $d_{50}$ (original).

Dann überführt man die vereinigten Siebfraktionen der o.g. Siebanalyse in eine Kugelmühle (Metallzylinder mit 11,5 cm Durchmesser und 10 cm Tiefe mit abnehmbarem Deckel, enthaltend 8 Stahlkugeln mit 20 mm Durchmesser und einem Gewicht von je 32,6 g) und mahlt sie darin bei 100 UpM 5 Minuten lang auf. Anschließend ermittelt man den mittleren Teilchendurchmesser: $d_{50}$ (nach Test).

Die Berechnung des Abriebs erfolgt nach dieser Formel:

$$\% \text{ Abrieb} = \frac{d_{50} \text{ (original) - } d_{50} \text{ (nach Test)}}{d_{50} \text{ (original)}} \cdot 100$$

Beispiel 1 (Vergleichsbeispiel)

30 kg im wesentlichen aus $\delta$-$Na_2Si_2O_5$ bestehendes Natriumsilikat (SKS-6 der Fa. HOECHST AG) mit einem mittleren Korndurchmesser von 12o $\mu$m wurden auf einem Walzenkompaktierer mit einem Preßdruck der Kompaktierwalzen von 30 KN/cm Walzenbreite mit anschließender Zerkleinerung der Schulpen in einem Siebgranulator und anschließender Absiebung zu einem staubfreien Granulat verarbeitet.
Das Granulat wies einen mittleren Teilchendurchmesser von 615 $\mu$m auf, sein Abrieb betrug 45,7 %.

Beispiel 2 (gemäß der Erfindung)

Auf 30 kg im wesentlichen aus $\delta$-$Na_2Si_2O_5$ bestehendes Natriumsilikat (SKS-6 der Fa. HOECHST AG) mit einem mittleren Korndurchmesser von 12o $\mu$m wurden in einem Eirich-Mischer 2 % einer 45 gewichtsprozentigen Wasserglaslösung (molares Verhältnis $SiO_2$/$Na_2O$ = 2,0) aufgesprüht. Die resultierende Mischung wurde gemäß Beispiel 1 zu einem staubfreien Granulat verarbeitet.
Der Abrieb des Granulates betrug 30,9 %.

Beispiel 3 (gemäß der Erfindung)

Beispiel 2 wurde mit der Änderung wiederholt, daß 3 % der Wasserglaslösung aufgesprüht wurden.
Der Abrieb des Granulates betrug 25,8 %.

Beispiel 4 (gemäß der Erfindung)

Beispiel 2 wurde mit der Änderung wiederholt, daß 4 % der Wasserglaslösung aufgesprüht wurden.
Der Abrieb des Granulates betrug 21,3 %.

Beispiel 5 (gemäß der Erfindung)

Auf 30 kg im wesentlichen aus $\delta$-$Na_2Si_2O_5$ bestehendes Natriumsilikat (SKS-6 der Fa. HOECHST AG) mit einem mittleren Korndurchmesser von 12o $\mu$m wurden in einem Eirich-Mischer 3 % aufgeschmolzener Fettalkoholpolyglykolether ([®]Genapol OA-80 der Fa. HOECHST AG) aufgesprüht. Die resultierende Mischung wurde gemäß Beispiel 1 zu einem staubfreien Granulat verarbeitet.
Der Abrieb des Granulates betrug 35,0 %.

Beispiel 6 (gemäß der Erfindung)

Beispiel 5 wurde mit der Änderung wiederholt, daß als Fettalkoholpolyglykolether [®]Genapol T-500 (HOECHST AG) aufgesprüht wurde.
Der Abrieb des Granulates betrug 25,2 %.

Beispiel 7 (gemäß der Erfindung)

Auf das staubfreie Granulat nach Beispiel 2 wurde in einem Eirich-Mischer zusätzlich 3 % aufgeschmolzener Fettalkoholpolyglykolether ([®]Genapol OA-70 der Fa. HOECHST AG) aufgesprüht.
Das umhüllte Granulat wies einen Abrieb von 6,9 % auf.

Beispiel 8 (gemäß der Erfindung)

Beispiel 7 wurde mit der Änderung wiederholt, daß als Fettalkoholpolyglykolether [®] Genapol T-500 (HOECHST AG) aufgesprüht wurde.
Das umhüllte Granulat wies einen Abrieb von 2,6 % auf.

**Patentansprüche**

1. Verfahren zur Herstellung eines verdichteten, körnigen Natriumsilikates mit einem Molverhältnis von $SiO_2$ : $Na_2O$ von 1,7 : 1 bis 4,1 : 1, insbesondere von 2 : 1 bis 3,5 : 1, dadurch gekennzeichnet, daß man ein Natriumsilikat mit einem mittleren Korndurchmesser von < 500 $\mu$m zunächst mit einem seine Härte erhöhenden Material, wobei es sich um mindestens eine Substanz aus der Gruppe Wasser, Kieselsol, Kieselgel, nichtionische, anionische oder kationische Tenside, Wasserglas, flüssige oder getrocknete Wasserglaslösungen, Maleinsäure und/oder Acrylsäure sowie deren Polymere und Copolymere handelt, innig vermischt, bevor man es durch Kompaktieren, Zerkleinern und Absieben in ein Preßgranulat mit Korngrößen von 0,1 bis 5 mm überführt.

2. Verfahren nach Anspruch 1, <u>dadurch gekennzeichnet</u>, daß dem Natriumsilikat das seine Härte erhöhende Material in einer Menge von bis zu 5 Gewichts-% zugesetzt wird

3. Verfahren nach Anspruch 1 oder 2, <u>dadurch gekennzeichnet</u>, daß das Natriumsilikat nach dem Erzeugen des Preßgranulats zunächst mechanisch gerundet wird.

4. Verfahren nach mindestens einem der Ansprüche 1 bis 3, <u>dadurch gekennzeichnet</u>, daß man das Preßgranulat mit dem seine Härte erhöhenden Material in einer Menge bis zu 6 Gewichts-%, bezogen auf das Natriumsilikat, zusätzlich umhüllt.

5. Verfahren nach mindestens einem der Ansprüche 1 bis 4, <u>dadurch gekennzeichnet</u>, daß die Überführung in Preßgranulat bei Temperaturen von 15 bis 180 °C erfolgt.

6. Verfahren nach mindestens einem der Ansprüche 1 bis 5, <u>dadurch gekennzeichnet</u>, daß man die zusätzliche Umhüllung des Preßgranulates mit dem seine Härte erhöhenden Material bei einer Temperatur zwischen 15 und 130 °C durchführt.

7. Verfahren nach mindestens einem der Ansprüche 1 bis 6, <u>dadurch gekennzeichnet</u>, daß man die Körnung des Natriumsilikates auf einem Walzenkompaktierer mit integrierter Zerkleinerung der entstehenden Schulpen durchführt.

## Claims

1. A process for preparing a compacted, granular sodium silicate having an $SiO_2/Na_2O$ molar ratio of 1.7 : 1 to 4.1 : 1, in particular of 2 : 1 to 3.5 : 1, characterized in that it comprises first intimately mixing a sodium silicate having a median particle diameter of < 500 $\mu$m with a material increasing its hardness, this being at least one substance from the group consisting of water, silica sol, silica gel, nonionic, anionic or cationic surfactants, water glass, liquid or dried water glass solutions, maleic acid and/or acrylic acid and polymers and copolymers thereof, before converting it into pressed granules having particle sizes of 0.1 to 5 mm by compacting, comminution and screening.

2. The process as claimed in claim 1, characterized in that the material increasing the hardness of the sodium silicate is added to the sodium silicate in an amount of up to 5 % by weight.

3. The process as claimed in claim 1 or 2, characterized in that, after production of the pressed granules, the sodium silicate is first mechanically rounded.

4. The process as claimed in at least one of claims 1 to 3, characterized in that the pressed granules are additionally coated with the material increasing their hardness in an amount of up to 6 % by weight, relative to the sodium silicate.

5. The process as claimed in at least one of claims 1 to 4, characterized in that the conversion into pressed granules is carried out at temperatures of 15 to 180°C.

6. The process as claimed in at least one of claims 1 to 5, characterized in that the additional coating of the pressed granules with the material increasing their hardness is carried out at a temperature of between 15 and 130°C.

7. The process as claimed in at least one of claims 1 to 6, characterized in that granulation of the sodium silicate is carried out on a roll compactor in combination with integrated comminution of the flakes formed.

## Revendications

1. Procédé de préparation d'un silicate de sodium granulaire densifié dont le rapport molaire $SiO_2/Na_2O$ est compris entre 1,7/1 et 4,1/1 et notamment entre 2/1 et 3,5/1, caractérisé en ce que l'on mélange intimement tout d'abord un silicate de sodium avec une taille de grain moyenne inférieure à 500 $\mu$m avec un matériau qui augmente sa dureté, ledit matériau étant au moins une substance choisie dans le groupe comprenant l'eau, le sol de silice, le gel de silice, des agents de surface non ioniques, anioniques ou cationiques, du verre soluble, des solutions de verre soluble liquides ou séchées, l'acide maléique et/ou l'acide acrylique ainsi que leurs polymères et copolymères, avant de le compacter, le broyer et le tamiser pour obtenir un granulé de pressage ayant une granulométrie comprise entre 0,1 et 5 mm.

2. Procédé selon la revendication 1, caractérisé en ce que le matériau augmentant la dureté du silicate de sodium est ajouté à ce dernier en une quantité allant jusqu'à 5 % en poids.

3. Procédé selon la revendication 1 ou la revendication 2, caractérisé en ce que le silicate de sodium peut être ensuite arrondi mécaniquement une fois que le granulé de pressage a été produit.

4. Procédé selon l'une au moins des revendications 1 à 3, caractérisé en ce que le granulé de pressage est en plus enrobé avec le matériau augmentant sa dureté en une quantité allant jusqu'à 6 % en poids, ramené au silicate de sodium.

5. Procédé selon l'une au moins des revendications 1 à 4, caractérisé en ce que la transformation en granulé de pressage se fait à des températures allant de 15 à 180 °C.

6. Procédé selon l'une au moins des revendications 1 à 5, caractérisé en ce que l'enrobage additionnel du granulé de pressage avec le matériau augmentant sa dureté se fait à une température comprise entre 15 et 130 °C.

7. Procédé selon l'une au moins des revendications 1 à 6, caractérisé en ce que la granulation du silicate de sodium se fait sur un dispositif de compression à cylindres avec broyage incorporé des galettes ainsi obtenues.